# EUROPEAN PATENT APPLICATION

(11) **EP 3 932 207 A1**
(43) Date of publication of application: **05.01.2022**
(21) Application number: 21176423.8
(22) Date of filing: 28.05.2021
(51) Int. Cl.: A23C 9/12, A45C 7/00, A47J 36/00

(54) **A FOLDABLE YOGURT MAKER**

(30) Priority: 30.06.2020 TR 202010327
(71) Applicant: Arçelik Anonim Sirketi, 34445 Istanbul (TR)
(72) Inventor: KAYA, Oguzhan, 34445 ISTANBUL (TR); VANCI, Can Onur, 34445 ISTANBUL (TR); ERDEM SAHNALI, Funda, 34445 ISTANBUL (TR); DURAN, Nihat, 34445 ISTANBUL (TR); RAMOGLU, Muhammet, 34445 ISTANBUL (TR)

(57) **Abstract**

The present invention relates to a yogurt maker (1) comprising a body (2); at least one receptacle (3) which is disposed in the body (2) and wherein the fermentation process occurs; a lid (4) which is provided on the body so as to eliminate the contact between the receptacle (3) and the outer environment; at least one heater (5) which is provided on the body (2); and a control panel (6) which is provided on the body (2) and which enables the parameters to be defined and displayed.

## Description

The present invention relates to a foldable yogurt maker.

Today, yogurt is a foodstuff which is often consumed in almost every household. Yogurt is often produced by boiling and fermenting milk at home. Since the boiling process and fermentation temperature of the milk is important for the quality of yogurt, the process must be carried out under constant observation. This situation causes a waste of time for consumers and makes the process difficult. Therefore, automatic yogurt makers are frequently used today. Since yogurt is consumed daily, especially in families with small children, the yogurt makers become very useful. The yogurt makers provide the user with functions such as heating, cooling, keeping warm, time setting, automatic termination, etc. However, with yogurt machines, the number of small household appliances used in the kitchen increases, causing problems in space. The users who do not have enough space often do not prefer yogurt makers and prefer traditional fermenting methods.

In the state of the art Chinese Utility Model Document No. CN203378494, a sleeve is disclosed, which is used for making yogurt.

The aim of the present invention is the realization of a yogurt maker which provides ease of use.

The yogurt maker realized in order to attain the aim of the present invention, explicated in the first claim and the respective claims thereof, comprises a body; at least one receptacle which is placed into the body; a lid which is provided on the body; a heater which is provided on the body; and a control panel which is provided on the body. The heater is positioned under the receptacle. Milk is added into the receptacle and the fermentation occurs. By means of the lid, the contact between the receptacle and the outer environment is eliminated. By means of the control panel, the user is enabled to determine the parameters and to be informed.

The yogurt maker of the present invention comprises a plurality of side walls which can be folded into the body and/or outwards from the body. When the side walls are folded outwards, the user is enabled to easily reach the receptacle. When the yogurt maker is not in use, the side walls are folded inwards, thus decreasing the space occupied.

In an embodiment of the present invention, the yogurt maker comprises the side wall having a first position wherein the receptacle is on the body and a second position wherein the receptacle is not on the body. When in the first position, the side walls are perpendicular to the base of the body, and when in the second position, the side walls are parallel to the base of the body.

In an embodiment of the present invention, the yogurt maker comprises a folding surface which is at the closest point of the side wall to the base of the body, and a fixing member which is provided between the folding surface and the base of the body. While moving between the first position and the second position, the movement of the side wall occurs at the folding surface. By means of the fixing member, the side wall retains its position.

In an embodiment of the present invention, the yogurt maker comprises an insulation member which is at least partially positioned in the folding surface. By means of the insulation member, heat loss from the folding surfaces which have a thinner structure is prevented.

In an embodiment of the present invention, the yogurt maker comprises a connection member which enables the two side walls to be connected to each other when the side walls are in the first position. When in the first position, the side walls are connected to each other by means of the connection member. The side walls are connected to each other longitudinally. Thus, the body gains a box form.

In an embodiment of the present invention, the yogurt maker comprises a connection member which is a zipper. By means of the zipper, the side walls are connected to each other almost longitudinally.

In an embodiment of the present invention, the yogurt maker comprises a first magnet which is provided at the inner surface of the side wall and a second magnet which is provided on the receptacle or the lid so as to align with the first magnet. When the side walls are in the first position, the first magnet and the second magnet attract each other. Thus, the side walls are enabled to be fixed in the first position.

By means of the present invention, a yogurt maker is realized, which occupies minimum space when not in use by means of the foldable side walls.

A yogurt maker realized in order to attain the aim of the present invention is illustrated in the attached figures, where:

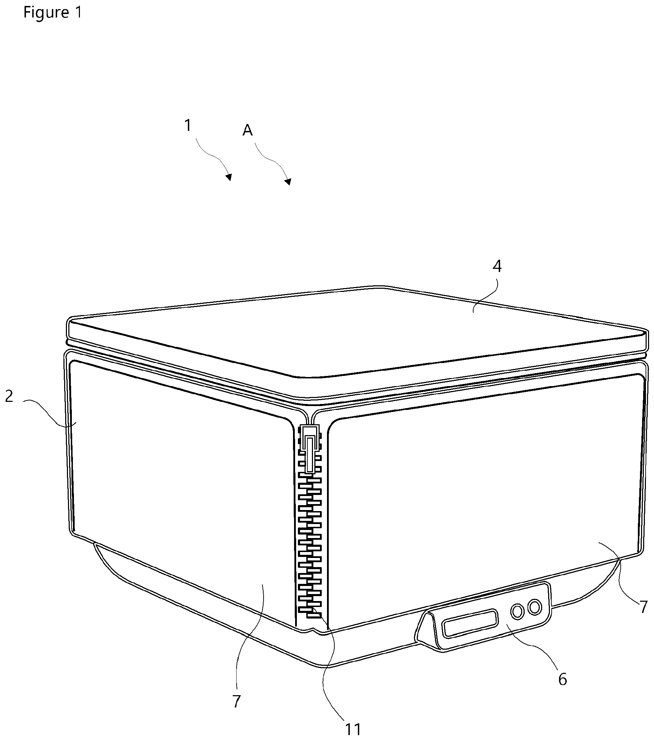

Figure 1 - is the perspective view of the yogurt maker when the side walls are in the first position.

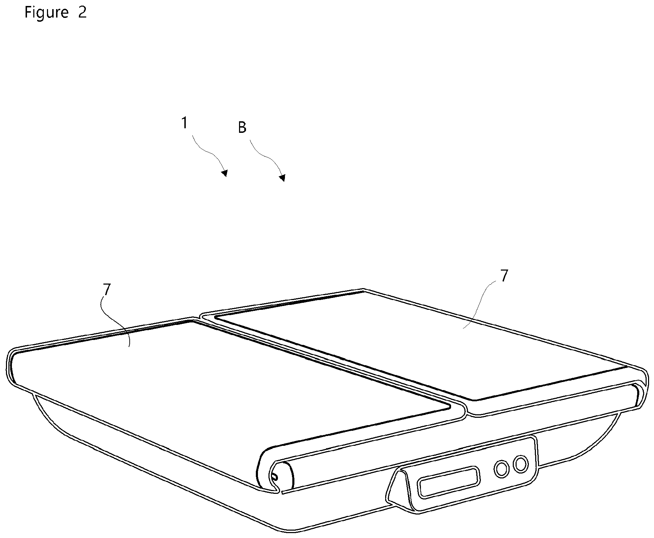

Figure 2 - is the perspective view of the yogurt maker when the side walls are in the second position.

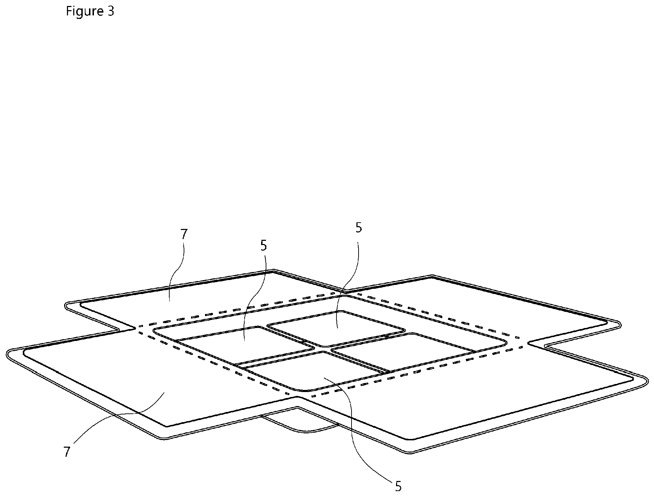

Figure 3 - is the perspective view of the heater and the body.

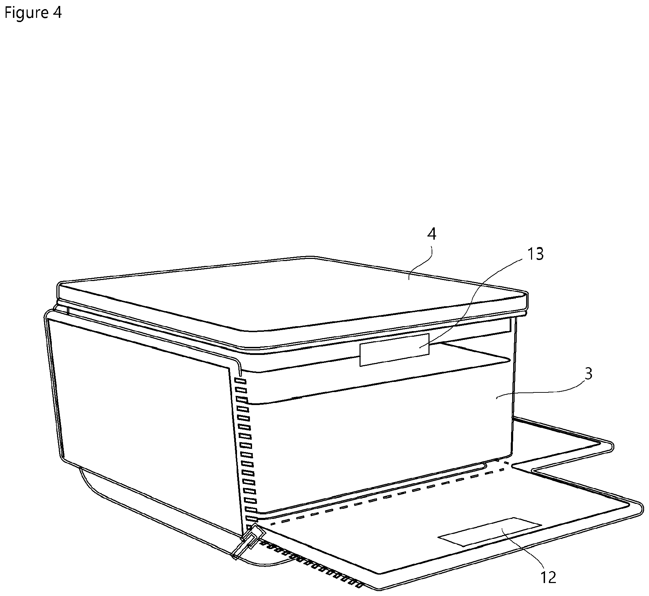

Figure 4 - is the perspective view on the body of the connection member, the first magnet and the second magnet.

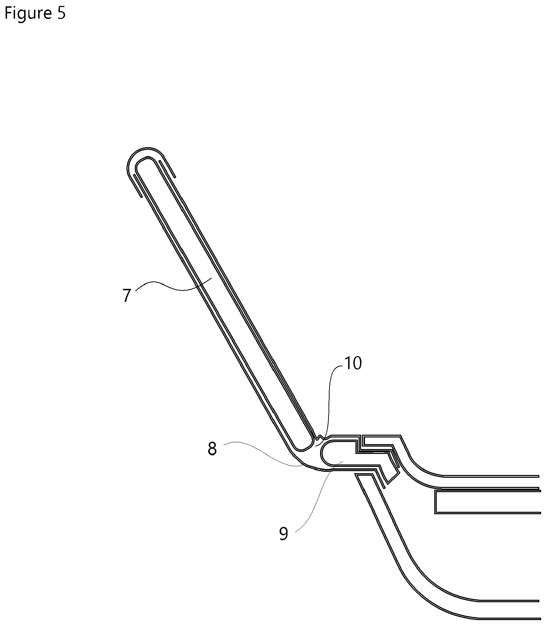

Figure 5 - is the view on the side wall of the folding surface, the fixing member and the insulation member.

The elements illustrated in the figures are numbered as follows:
1. Yogurt maker
2. Body
3. Receptacle
4. Lid
5. Heater
6. Control panel
7. Side wall
8. Folding surface
9. Fixing member
10. Insulation member
11. Connector member
12. First magnet
13. Second magnet
a. First position
b. Second position

The yogurt maker (1) comprises a body (2); at least one receptacle (3) which is disposed in the body (2) and wherein the fermentation process occurs; a lid (4) which is provided on the body so as to eliminate the contact between the receptacle (3) and the outer environment; at least one heater (5) which is provided on the body (2); and a control panel (6) which is provided on the body (2) and which enables the parameters to be defined and displayed. Milk is filled into the receptacle (3), and the receptacle (3) is heated by means of the heaters (5). By means of the lid (4), the contact between the receptacle (3) and the outer environment is eliminated. Thus, the fermentation process occurs. By means of the control panel (6), the user is enabled to determine the parameters and to be informed.

The yogurt maker (1) of the present invention comprises a plurality of side walls (7) which can be folded into the body (2) and/or outwards from the body (2). When the side walls (7) are folded outwards from the body (2), the user can easily access the receptacle (3). When the side walls (7) are folded outwards, the yogurt maker (1) is enabled to occupy less space.

In an embodiment of the present invention, the yogurt maker (1) comprises the side wall (7) having a first position (A) wherein the side wall (7) is perpendicular to the base of the body (2) when the receptacle (3) is on the body (2), and a second position (B) wherein the side wall (7) is parallel to the base of the body (2) when the receptacle (3) is not on the body (2). When in the first position (A), the side wall (7) is perpendicular to the base of the body (2). During the operation of the yogurt maker (1), the side wall (7) is in the first position (A). When the yogurt maker (1) is not in use, the side walls (7) are in the second position (B). Thus, the yogurt maker (1) is enabled to occupy less space.

In an embodiment of the present invention, the yogurt maker (1) comprises a folding surface (8) which is at the closest point of the side wall (7) to the base of the body (2), and a fixing member (9) which is provided between the folding surface (8) and the base of the body (2). The folding surface (8) is produced from a thin, foldable material. The fixing member (9) acts as a pin mounted to the side of the body (2). Thus, the side wall (7) is enabled to retain its position.

In an embodiment of the present invention, the yogurt maker (1) comprises an insulation member (10) which is at least partially positioned in the folding surface (8). By means of the insulation member (10) provided in the folding surface (8), heat loss from the folding surface (8) is prevented.

In an embodiment of the present invention, the yogurt maker (1) comprises a connection member (11) which is positioned between the two side walls (7) when the side walls (7) are in the first position (A). The connection member (11) enables the side walls (7) to be connected to each other when the latter is in the first position (A). Thus, during the fermentation process, the receptacle (3) can be placed into the body (2), and the rigidity of the body (2) is ensured.

In an embodiment of the present invention, the yogurt maker (1) comprises the connection member (11) which is a zipper. By means of the zipper, the side walls (7) are connected to each other almost longitudinally. Thus, the rigidity of the body (2) is improved.

In an embodiment of the present invention, the yogurt maker (1) comprises a first magnet (12) which is provided at the inner side of the side wall (7) and a second magnet (13) which is provided on the receptacle (3) or the lid (4) so as to align with the first magnet (12) when the side wall (7) is in the first position (A). When the side wall (7) is in the first position (A), the first magnet (12) and the second magnet (13) align with and attract each other. Thus, when the receptacle (3) is in the body (2), the side walls (7) are enabled to be kept in the first position (A):

By means of the present invention, a yogurt maker (1) is realized, comprising side walls (7) which can be folded when not in use so as to occupy less space. The fermentation process occurs in the receptacle (3) which is placed into the body (2). When the receptacle (3) is in the body (2), the side walls (7) are in the first position (A), and when the receptacle (3) is not in the body (2), the side walls (7) are in the second position (B).

## Claims

1. A yogurt maker (1) **comprising** a body (2); at least one receptacle (3) which is disposed in the body (2) and wherein the fermentation process occurs; a lid (4) which is provided on the body so as to eliminate the contact between the receptacle (3) and the outer environment; at least one heater (5) which is provided on the body (2); and a control panel (6) which is provided on the body (2) and which enables the parameters to be defined and displayed, **characterized by** a plurality of side walls (7) which can be folded into the body (2) and/or outwards from the body (2).

2. A yogurt maker (1) as in Claim 1, **characterized by** the side wall (7) having a first position (A) wherein the side wall (7) is perpendicular to the base of the body (2) when the receptacle (3) is on the body (2), and a second position (B) wherein the side wall (7) is parallel to the base of the body (2) when the receptacle (3) is not on the body (2).

3. A yogurt maker (1) as in Claim 1 or Claim 2, **characterized by** a folding surface (8) which is at the closest point of the side wall (7) to the base of the body (2), and a fixing member (9) which is provided between the folding surface (8) and the base of the body (2).

4. A yogurt maker (1) as in Claim 3, **characterized by** an insulation member (10) which is at least partially positioned in the folding surface (8).

5. A yogurt maker (1) as in any one of Claim 2 to Claim 4, **characterized by** a connection member (11) which is positioned between the two side walls (7) when the side walls (7) are in the first position (A).

6. A yogurt maker (1) as in Claim 5, **characterized by** the connection member (11) which is a zipper.

7. A yogurt maker (1) as in any one of Claim 2 to Claim 6, **characterized by** a first magnet (12) which is provided at the inner side of the side wall (7) and a second magnet (13) which is provided on the receptacle (3) or the lid (4) so as to align with the first magnet (12) when the side wall (7) is in the first position (A).
